# EUROPEAN PATENT APPLICATION

(11) **EP 4 644 587 A1**
(43) Date of publication of application: **05.11.2025**
(21) Application number: 23910807.9
(22) Date of filing: 28.12.2023
(51) Int. Cl.: C25B 13/08, C25B 1/04

(54) **ORGANIC-INORGANIC COMPOSITE SEPARATOR FOR PRODUCTION OF HYDROGEN BY ALKALINE WATER ELECTROLYSIS, AND PREPARATION METHOD THEREFOR**

(30) Priority: 28.12.2022 CN 202211698396
(71) Applicant: Hua Xia Hydrogen Technology (Xiamen) Co., Ltd., Xiamen, Fujian 361000 (CN)
(72) Inventor: ZHI, Suohong, Xiamen, Fujian 361005 (CN); GAO, Xiaoping, Xiamen, Fujian 361005 (CN)
(74) Representative: Winter, Brandl - Partnerschaft mbB
(86) International application number: PCT/CN2023/142641
(87) International publication number: WO 2024/140890

(57) **Abstract**

The present invention provides an improved organic-inorganic composite diaphragm for hydrogen production by alkaline water electrolysis, and a preparation method therefor. An organic polymer resistant to high temperature and concentrated alkali is selected; a polar polymer and a soluble metal salt are introduced into a diaphragm-forming solution; an aqueous alcohol solution containing ions capable of precipitating the metal salt in the diaphragm-forming solution is used as a diaphragm-forming coagulation bath; and the diaphragm and inorganic particles are generated simultaneously to prepare an organic-inorganic composite diaphragm having the inorganic particles uniformly distributed on the surface and the interior of the diaphragm. The organic-inorganic composite diaphragm has few defects, high stability and strong controllability, is used as a diaphragm for hydrogen production by alkaline water electrolysis, and demonstrates a lower electrolysis voltage and very high electrolysis efficiency.

## Description

### Technical Field

The present invention belongs to the field of hydrogen production by alkaline water electrolysis, and relates to polymer diaphragm, and more specifically, to an organic-inorganic composite diaphragm for hydrogen production by alkaline water electrolysis, and preparation method thereof.

### Background

Unlike other new energy sources such as solar energy, nuclear energy, geothermal energy, ocean energy, and biomass energy, hydrogen energy is a renewable energy source derived from energy-carrying substance. Due to its features of high combustion heat, no pollution, and wide availability, hydrogen is regarded as one of the desired energy carriers.

Currently, hydrogen is mainly produced from natural gas, petroleum and its products, coal, and water electrolysis in industry. The cost of hydrogen production from fossil fuels is low, but the pollution and the generation of greenhouse gases will be caused inevitably during the process, and fossil fuels as raw materials are non-renewable. In contrast, hydrogen production from water electrolysis produces no greenhouse gases, and especially hydrogen production from alkaline water electrolysis, as a relatively mature and reliable method, is simply operated, causes no pollution during the process and has a high hydrogen purity up to 99.7%~99.9%.

The alkaline electrolyzer stacks is used as the main device for hydrogen production by alkaline water electrolysis, which is mainly composed of multiple electrolytic cells. Each electrolytic cell includes anode, cathode, diaphragm and electrolyte. The diaphragm plays a critical role in the alkaline electrolyzer, and it is positioned between the cathode and the anode. A suitable diaphragm should have the following characteristics of: (1) allowing ions to pass through while making it difficult for hydrogen and oxygen gas molecules to pass through; (2) having a high porosity and a low resistance; (3) having a small and uniform average pore size so as to prevent gas from penetrating and diffusing; (4) having uniform physical and chemical properties so as to achieve uniform current distribution and high current efficiency; (5) having a resistance to the corrosion of raw materials and products of the electrolysis; (6) having a good chemical stability with regard to the operating conditions of the electrolyzer, such as temperature, pressure and pH value; and (7) having a high mechanical strength and rigidity.

Conventionally, in China, most of the alkaline electrolyzer manufacturers use asbestos cloth as the diaphragm in the past. Asbestos diaphragm has the advantages of low price and good insulation, but it still has several drawbacks as follows: (1) asbestos tends to swell during electrolysis, which will significantly reduce its service life, and additionally the impact of gas is easy to cause holes produced on asbestos along the direction of its thickness, which will lead to the purity decrease of the produced gas; (2) asbestos material is easy to dissolve in high-temperature alkaline solution; and (3) asbestos is a carcinogen, and some fine asbestos fibers released during the process of mining, processing and use will be harmful to human health.

At present, there are mainly two types of non-asbestos diaphragms developed for hydrogen production by alkaline water electrolysis. One is a fabric woven from organic polymer fibers, mainly made of polyphenylene sulfide (PPS), which has stable chemical properties and can withstand high temperature and concentrated alkali. The pore size of commercially available fiber diaphragms is 1~10 µm, and accordingly oxygen produced on the anode side can easily mix with hydrogen produced on the cathode side during the electrolysis. In order to achieve long-term stable operation and good gas barrier performance, according to the conventional method, the fiber density of the fiber diaphragm is increased so as to reduce its average pore size, however, which will lead to an increased thickness and consequently a higher surface resistance of the diaphragm. Additionally, since the fiber of the fabric diaphragm has high hydrophobicity, some treatments such as grafting and sulfonation are required to perform on the fiber or the surface of the diaphragm so as to ensure that the diaphragm will have better wettability to the alkaline solution and meanwhile the features of the alkaline solution will be not changed. CN112159989A and CN109554724A have disclosed that such hydrophilic modified organic diaphragm used for electrolysis exhibited good electrolysis effects. However, after hydrophilic treatment, the organic diaphragm is unable to withstand the electrolysis conditions of high temperature and concentrated alkali for a long time, and thus has poor long-term stability in use. Furthermore, hydrophilic modification usually requires to use strong corrosive agents. For example, sulfonated PPS fibers are generally obtained by sulfonation with high-temperature concentrated sulfuric acid, and then the modified fibers need to be rinsed with a large amount of water, and consequently wastewater containing sulfuric acid will be produced, which is difficult to deal with and leads to the environmental pollution. The other type is organic-inorganic composite diaphragms, such as those disclosed by CN114432906A and CN107709622A, wherein organic diaphragm-forming materials and inorganic materials such as titanium oxide and zirconium oxide were blended, and then subjected to the immersion precipitation phase inversion process, so that the diaphragms with asymmetric structure were obtained. In such method, the advantageous features of organic and inorganic materials are combined, and among them, the features of the hydrophilicity and high-temperature concentrated alkali resistance of the inorganic materials are particularly useful. It should be noted that, when the nano-sized inorganic materials are used, it is required to avoid the agglomeration of such inorganic materials by complex processes. Moreover, the organic-inorganic composite diaphragm prepared by this method has a weak bonding between the organic phase and the inorganic phase, and as a result, the inorganic materials are prone to detachment during long-term operation, leading to a performance decline for the diaphragm.

In view of the problems in the current technology described above, there are demands to develop a composite diaphragm for alkaline electrolyzers which can be produced stably by a simple process in large quantities and large areas, has a resistance to high temperature of 90~160°C and concentrated alkali, has a high mechanical strength, and includes inorganic materials that are not prone to detachment during long-term electrolysis process, and the preparation method thereof, that is of great significance for promoting the development of hydrogen production by alkaline water electrolysis.

### Summary of the Invention

The purpose of the present invention is to solve at least part of the problems of the diaphragms for hydrogen production by alkaline water electrolysis in the prior art, and to provide an improved organic-inorganic composite diaphragm for hydrogen production by alkaline water electrolysis and the preparation method thereof, wherein an organic polymer resistant to high temperature and concentrated alkali is selected, a polar polymer and a soluble metal salt are introduced into a diaphragm-forming solution, and an aqueous alcohol solution containing ions capable of precipitating the metal salt in the diaphragm-forming solution is used as a diaphragm-forming coagulation bath, so that the diaphragm and inorganic particles can be generated simultaneously to prepare an organic-inorganic composite diaphragm containing the inorganic particles uniformly distributed on the surface and in the interior of the diaphragm. The organic-inorganic composite diaphragm has few defects, high stability and strong controllability, is used as a diaphragm for hydrogen production by alkaline water electrolysis, and demonstrates a lower electrolysis voltage and very high electrolysis efficiency.

The present invention provides a method for preparing an organic-inorganic composite diaphragm for hydrogen production by alkaline water electrolysis, which comprises the following steps of:
(1) adding a diaphragm-forming polymer, a sulfonated polymer, a metal salt, an aqueous alcohol solution, and a solvent with a mass ratio of (10~30):(5~20):(5~20):(1~5):(25~79) into a stirring kettle, heating the mixture to 65~95°C and stirring thoroughly until a homogeneous solution is obtained, leaving the solution stand for defoaming to prepare a diaphragm-forming solution;
(2) evenly coating the diaphragm-forming solution onto the surface of a polymer support mesh, using an aqueous alcohol solution containing ions capable of precipitating the metal salt in the diaphragm-forming solution as the diaphragm-forming coagulation bath, and immersing the polymer support mesh coated with the diaphragm-forming solution into the diaphragm-forming coagulation bath to form a primary diaphragm via immersion precipitation phase separation;
(3) removing the solvent from the primary diaphragm to obtain the organic-inorganic composite diaphragm.

The present invention also provides an organic-inorganic composite diaphragm for hydrogen production by alkaline water electrolysis, which is prepared by the method of the present invention.

The invention has the advantages and beneficial effects as described below. According to the present invention, an diaphragm-forming polymer resistant to high temperature and concentrated alkali is selected, a polar polymer and a soluble metal salt are introduced into a diaphragm-forming solution to form complex metal salt, and an aqueous alcohol solution containing ions capable of precipitating the metal salt in the diaphragm-forming solution is used as a diaphragm-forming coagulation bath, so that the diaphragm and inorganic particles can be generated simultaneously, that is, an organic-inorganic composite diaphragm containing inorganic particles can be obtained through in-situ mineralization technology, wherein the inorganic particles are uniformly deposited on the surface of the diaphragm, on the surface of pores in the diaphragm, and throughout the entire cross-section of the diaphragm. The organic-inorganic composite diaphragm prepared by this process has high hydrophilicity, and the problem of detachment of inorganic materials during long-term use due to the weak bonding between inorganic particles and the diaphragm substrate in the conventional diaphragm preparation methods can be avoided. Moreover, according to the present invention, the size and the distribution of pores in the diaphragm and the inorganic particles are easy to control. Therefore, the present invention provides a simple and practical new process for the stable production of organic-inorganic composite diaphragms in large quantities and large areas.

### Brief Description of the Drawings

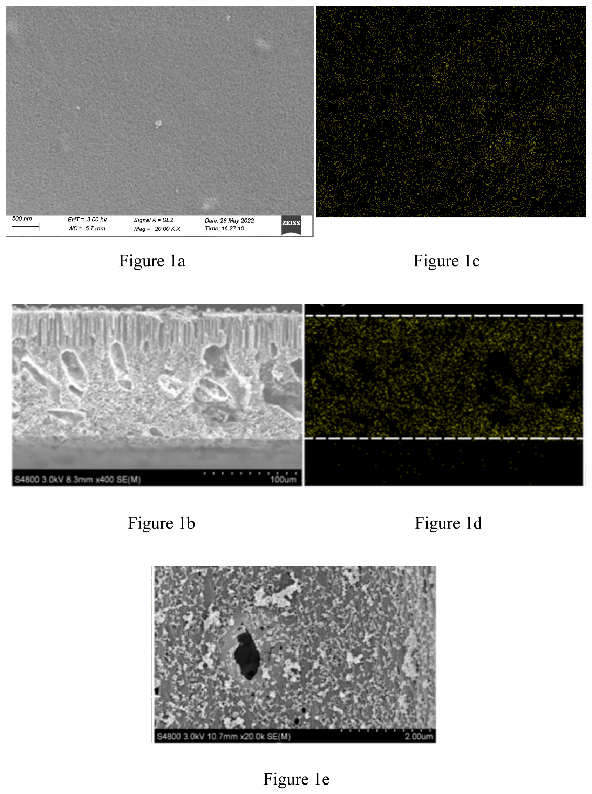

Figs. 1a-1e are scanning electron microscope images and energy spectrum images of the surface and cross-section of the diaphragm in Example 1, wherein figs. 1a and 1b are scanning electron microscope images of the surface and cross-section of the diaphragm, figs. 1c and 1d are energy spectrum images of the surface and cross-section of the diaphragm, and fig. 1e shows the inorganic particles on the surface of the hole inside the diaphragm, and wherein the yellow spots in the energy spectrum image represents the energy spectrum surface scan image of the inorganic particle.

### Detailed Description

The present invention will be further explained in detail through the accompanying drawings and embodiments. Through these descriptions, the features and advantages of the present application will become more clearly defined.

The term "exemplary" used herein means "serving as an example, embodiment, or illustration." Any embodiment described herein as "exemplary" should not be interpreted as being superior or better than other embodiments. Although various aspects of the embodiments are shown in the drawings, they need not be drawn to scale unless specifically indicated.

Furthermore, the technical features in different embodiments of the present application described below can be combined with each other if they do not conflict.

In one embodiment of the present invention, the present invention relates to a method for preparing an organic-inorganic composite seperator for hydrogen production by alkaline electrolysis of water, which is characterized by comprising the following steps of: (1) adding a diaphragm-forming polymer, a sulfonated polymer, a metal salt, an aqueous alcohol solution, and a solvent with a mass ratio of (10~30):(5~20):(5~20):(1~5):(25~79) into a stirring kettle, heating the mixture to 65~95°C and stirring thoroughly until a homogeneous solution is obtained, leaving the solution stand for defoaming to prepare a diaphragm-forming solution; (2) evenly coating the diaphragm-forming solution onto the surface of a polymer support mesh, using an aqueous alcohol solution containing ions capable of precipitating the metal salt in the diaphragm-forming solution as a diaphragm-forming coagulation bath, and immersing the polymer support mesh coated with the diaphragm-forming solution into the diaphragm-forming coagulation bath to form a primary diaphragm via immersion precipitation phase separation; (3) removing the solvent from the primary diaphragm to obtain the organic-inorganic composite diaphragm.

In the present invention, the aqueous alcohol solution used in the diaphragm-forming solution can allow the diaphragm-forming solution in an unsteady state and increase the phase separation rate during the formation of the diaphragm, and said aqueous alcohol solution usually comprises low-molecular-weight alcohols, such as monohydric alcohol, preferably ethanol. The aqueous alcohol solution used in the diaphragm-forming coagulation bath can reduce the phase separation rate, promote the formation of pores in the diaphragm, and improve the porosity of the diaphragm and form a sponge-like structure, and said aqueous alcohol solution usually comprises polyols, preferably diethylene glycol and triethylene glycol.

In one embodiment of the present invention, the diaphragm-forming polymer is one or more selected from the group consisting of polysulfone, polyethersulfone and polyimide.

In one embodiment of the present invention, the sulfonated polymer is one or more selected from the group consisting of sulfonated polyphenylene sulfide, sulfonated polyether ether ketone and sulfonated polytetrafluoroethylene, and the sulfonation degree of the sulfonated polymer is preferably 2% to 30%.

In one embodiment of the present invention, the metal salt is one or more selected from the group consisting of calcium chloride, barium chloride, a mixture of nickel nitrate and ferrous sulfate, tetrabutyl titanate and zirconium oxychloride.

In one embodiment of the present invention, the volume ratio of alcohol to water in the aqueous alcohol solution is 80:20 to 60:40.

In one embodiment of the present invention, the solvent in the diaphragm-forming solution is used to dissolve the diaphragm-forming polymer, the sulfonated polymer and the aqueous alcohol solution. The solvent is selected based on the principle that the solvent should be a polar solvent, and the solubility parameters of the solvent and the substance dissolved in the solvent should be close. Preferably, the solvent is one or more selected from the group consisting of N,N-dimethylacetamide (DMAc), N,N-dimethylformamide (DMF), dimethyl sulfoxide (DMSO) and N- methylpyrrolidone (NMP).

In one embodiment of the present invention, the polymer support mesh is made by one or more materials selected from the group consisting of polypropylene, polyimide, polyphenylene sulfide, polyether ether ketone and nylon-66, with a thickness of 10 to 450 µm and a mesh size of 20 to 150 mesh.

In one embodiment of the present invention, before coated with the diaphragm-forming solution, the polymer support mesh is heated to a temperature of 40 to 80°C. Preheating the polymer support mesh can improve the wettability of the diaphragm-forming solution on the support mesh, regulate the rate of pre-crystallization of the polymeric diaphragm-forming material on the support mesh, and enhance the compatibility between the diaphragm-forming material and the support mesh.

In one embodiment of the present invention, the diaphragm-forming coagulation bath is an aqueous alcohol solution with the mass ratio of alcohol to water ranging from 5:95 to 25:75, and the alcohol is a mixture of diethylene glycol and triethylene glycol in equal mass proportions. When the metal salt in the diaphragm-forming solution is calcium chloride, the diaphragm-forming coagulation bath contains sodium carbonate, ammonium carbonate or phosphoric acid with a mass concentration of 2% to 15%; when the metal salt in the diaphragm-forming solution is barium chloride, the diaphragm-forming coagulation bath contains sulfuric acid with a mass concentration of 1% to 10%; when the metal salt in the diaphragm-formimg solution is a mixture of nickel nitrate and ferrous sulfate, the diaphragm-forming coagulation bath contains potassium hydroxide with a mass concentration of 1% to 5%; when the metal salt in the diaphragm-forming solution is tetrabutyl titanate, the diaphragm-forming coagulation bath contains hydrochloric acid with a mass concentration of 1% to 5%; and when the metal salt in the diaphragm-forming solution is zirconium oxychloride, the diaphragm-forming coagulation bath contains ammonia water with a mass concentration of 1% to 10%.

In one embodiment of the present invention, the removal of the solvent in the primary diaphragm is achieved by immersing the primary diaphragm in ultrapure water, preferably for 48h, changing the ultrapure water every 12h to thoroughly displace the solvent in the diaphragm, and then immersing the diaphragm in ethanol aqueous solution with increasing concentration in order to remove the water from the diaphragm.

In another embodiment of the present invention, the present invention provides an organic-inorganic composite diaphragm for hydrogen production by alkaline water electrolysis, which is prepared by the method of the present invention.

The present invention will be described in more detail by the following examples, but the examples do not constitute limitations of the present invention.

### Examples

### Example 1

Polysulfone, sulfonated polyphenylene sulfide with a sulfonation degree of 5%, calcium chloride, an ethanol-water solution with an ethanol volume fraction of 20%, and N,N-dimethylacetamide were added to a stirring kettle in a mass ratio of 15:10:8:5:62 and mixed uniformly. The mixture was heated to 75°C and stirred thoroughly to form a homogeneous solution, and then was left stand for defoaming. The diaphragm-forming solution was transferred to the feed tank of a coating machine and evenly coated on the surface of a polyphenylene sulfide support mesh with a thickness of 30 µm and a mesh size of 100 mesh at a speed of 0.2 m/min. Before coating with the diaphragm-forming solution, the polyphenylene sulfide support mesh was heated to a temperature of 50°C. The support mesh coated with the diaphragm-forming solution was immersed in a diaphragm-forming coagulation bath at 30°C for 5 minutes to form a primary diaphragm. The diaphragm-forming coagulation bath consisted of 5% sodium carbonate, 10% diethylene glycol, 10% triethylene glycol, and 75% ultrapure water. The primary diaphragm was immersed in ultrapure water for 48 hours to completely displace the solvent in the diaphragm, and then sequentially immersed in ethanol aqueous solutions with increasing concentrations to remove the water from the diaphragm, resulting in an organic-inorganic composite diaphragm.

The diaphragm prepared in Example 1 was characterized by scanning electron microscope and energy dispersive spectrometer, as shown in details in Figures 1a to 1e. It can be seen from the scanning electron microscope images that a large number of pores are evenly distributed on the surface of the diaphragm, and the size of the pore is 30~65 nm, and calcium carbonate particles are evenly distributed on the surface of the pore. There is a typical finger-like hole structure on the cross-section of the diaphragm, and there is a thin skin layer near the surface of the cross-section, and calcium carbonate particles are evenly distributed throughout the cross-section of the diaphragm. Upon magnified observation of the pores in the cross-section, it can be seen that calcium titanate particles are distributed on the inner surface of the pores. The elemental mapping was performed on the surface and cross-section of the diaphragm by energy dispersive spectrometer, wherein the yellow spots represent calcium elements. The diaphragm has consistent distribution patterns of calcium elements on its surface and cross-section, indicating that the calcium titanate particles generated through the phase inversion of the diaphragm are evenly distributed on both the surface and cross-section of the diaphragm. The high hydrophilicity of calcium carbonate particles significantly enhances the hydrophilicity of the diaphragm surface and the inner surface of the pores, thereby improving the wettability of the diaphragm to the alkali solution and increasing the alkali solution retention capacity of the pores in the diaphragm.

### Example 2

Polyethersulfone, sulfonated poly(ether-ether-ketone) with a sulfonation degree of 10%, barium chloride, an ethanol-water solution with an ethanol volume fraction of 25%, and N,N-dimethylacetamide was added to a stirring kettle in a mass ratio of 12:5:10:4:69 and mixed uniformly. The mixture was heated to 80°C and stirred thoroughly to form a homogeneous solution, and then was left stand for defoaming. The diaphragm-forming solution was transferred to the feed tank of a coating machine and evenly coated on the surface of a poly(ether-etherketone) support mesh with a thickness of 100 µm and a mesh size of 40 mesh at a speed of 0.5 m/min. Before coating with the diaphragm-forming solution, the poly(ether-ether-ketone) support mesh was heated to a temperature of 60°C. The support mesh coated with the diaphragm-forming solution was immersed in a diaphragm-forming coagulation bath at 30°C for 8 minutes to form a primary diaphragm. The diaphragm-forming coagulation bath consisted of 3% sulfuric acid, 10% diethylene glycol, 10% triethylene glycol, and 77% ultrapure water. The primary diaphragm was immersed in ultrapure water for 48 hours to completely displace the solvent in the diaphragm, and then sequentially immersed in ethanol aqueous solutions with increasing concentrations to remove the water from the diaphragm, resulting in an organic-inorganic composite diaphragm.

### Example 3

Polyimide, sulfonated polytetrafluoroethylene with a sulfonation degree of 20%, equal proportion mixture of nickel nitrate and ferrous sulfate, an ethanol-water solution with an ethanol volume fraction of 25%, and N,N-dimethylacetamide was added to a stirring kettle in a mass ratio of 14:10:6:5:65 and mixed uniformly. The mixture was heated to 75°C and stirred thoroughly to form a homogeneous solution, and then was left stand for defoaming. The diaphragm-forming solution was transferred to the feed tank of a coating machine and evenly coated on the surface of a polypropylene support mesh with a thickness of 150 µm and a mesh size of 80 mesh at a speed of 0.3 m/min. Before coating with the diaphragm-forming solution, the polypropylene support mesh was heated to a temperature of 50°C. The support mesh coated with the diaphragm-forming solution was immersed in a diaphragm-forming coagulation bath at 25°C for 15 minutes to form a primary diaphragm. The diaphragm-forming coagulation bath consisted of 5% potassium hydroxide, 10% diethylene glycol, 10% triethylene glycol, and 75% ultrapure water. The primary diaphragm was immersed in ultrapure water for 48 hours to completely displace the solvent in the diaphragm, and then sequentially immersed in ethanol aqueous solutions with increasing concentrations to remove the water from the diaphragm, resulting in an organic-inorganic composite diaphragm.

### Example 4

Polysulfone, sulfonated polyphenylene sulfide with a sulfonation degree of 12%, tetrabutyl titanate, an ethanol-water solution with an ethanol volume fraction of 10%, and N,N-dimethylacetamide was added to a stirring kettle in a mass ratio of 12:8:8:10:62and mixed uniformly. The mixture was heated to 65°C and stirred thoroughly to form a homogeneous solution, and then was left stand for defoaming. The diaphragm-forming solution was transferred to the feed tank of a coating machine and evenly coated on the surface of a nylon-66 support mesh with a thickness of 200 µm and a mesh size of 100 mesh at a speed of 0.8 m/min. Before coating with the diaphragm-forming solution, the nylon-66 support mesh was heated to a temperature of 40°C. The support mesh coated with the diaphragm-forming solution was immersed in a diaphragm-forming coagulation bath at 15°C for 10 minutes to form a primary diaphragm. The diaphragm-forming coagulation bath consisted of 4% hydrochloric acid, 10% diethylene glycol, 10% triethylene glycol, and 76% ultrapure water. The primary diaphragm was immersed in ultrapure water for 48 hours to completely displace the solvent in the diaphragm, and then sequentially immersed in ethanol aqueous solutions with increasing concentrations to remove the water from the diaphragm, resulting in an organic-inorganic composite diaphragm.

### Example 5

Polysulfone, sulfonated polytetrafluoroethylene with a sulfonation degree of 20%, zirconium oxychloride, an ethanol-water solution with an ethanol volume fraction of 10%, and N,N-dimethylacetamide was added to a stirring kettle in a mass ratio of 10:10:5:10:62 and mixed uniformly. The mixture was heated to 65°C and stirred thoroughly to form a homogeneous solution, and then was left stand for defoaming. The diaphragm-forming solution was transferred to the feed tank of a coating machine and evenly coated on the surface of a polyimide support mesh with a thickness of 450 µm and a mesh size of 50 mesh at a speed of 0.3 m/min. Before coating with the diaphragm-forming solution, the polyimide support mesh was heated to a temperature of 50°C. The support mesh coated with the diaphragm-forming solution was immersed in a diaphragm-forming coagulation bath at 20°C for 15 minutes to form a primary diaphragm. The diaphragm-forming coagulation bath consisted of 5% ammonia water, 10% diethylene glycol, 10% triethylene glycol, and 75% ultrapure water. The primary diaphragm was immersed in ultrapure water for 48 hours to completely displace the solvent in the diaphragm, and then sequentially immersed in ethanol aqueous solutions with increasing concentrations to remove the water from the diaphragm, resulting in an organic-inorganic composite diaphragm.

### Example 6

Polysulfone, sulfonated poly(ether-ether-ketone) with a sulfonation degree of 30%, calcium chloride, an ethanol-water solution with an ethanol volume fraction of 15%, and N,N-dimethylacetamide was added to a stirring kettle in a mass ratio of 15:12:8:5:60 and mixed uniformly. The mixture was heated to 70°C and stirred thoroughly to form a homogeneous solution, and then was left stand for defoaming. The diaphragm-forming solution was transferred to the feed tank of a coating machine and evenly coated on the surface of a poly(ether-etherketone) support mesh with a thickness of 250 µm and a mesh size of 50 mesh at a speed of 1.0 m/min. Before coating with the diaphragm-forming solution, the poly(ether-ether-ketone) support mesh was heated to a temperature of 60°C. The support mesh coated with the diaphragm-forming solution was immersed in a diaphragm forming coagulation bath at 30°C for 5 minutes to form a primary diaphragm. The diaphragm-forming coagulation bath consisted of 5% phosphoric acid, 10% diethylene glycol, 10% triethylene glycol, and 75% ultrapure water. The primary diaphragm was immersed in ultrapure water for 48 hours to completely displace the solvent in the diaphragm, and then sequentially immersed in ethanol aqueous solutions with increasing concentrations to remove the water from the diaphragm, resulting in an organic-inorganic composite diaphragm.

The composite diaphragms for hydrogen production by alkaline water electrolysis prepared in Examples 1 to 6 were tested along with two commercially available sulfonated polyphenylene sulfide woven fabrics (referred to as Comparative Examples 1 and 2 respectively), and the test results were shown in Table 1.

The polyphenylene sulfide woven fabric of Comparative Example 1 was purchased from Toray Industries, Inc., and that is the third-generation polyphenylene sulfide diaphragm of Toray with an areal weight of 445±20 g/m² and a surface resistance of less than 0.25 Ω•cm². The polyphenylene sulfide woven fabric of Comparative Example 2 was purchased from the Tianjin Key Laboratory of Pulp and Paper, and has an areal weight of 570±30 g/m² and a surface resistance of less than 0.40 Ω•cm².

The testing methods for Electrolysis Water Tests 1, 2, and 3 involved that circular diaphragms and polyphenylene sulfide woven fabrics with an area of 6.151 cm² were taken, nickel mesh (thickness of 0.38 mm, 60 mesh) was used as the anode and cathode, and 6M potassium hydroxide aqueous solution was used as the electrolyte; the electrolysis was performed by way of constant current charging with a current density of 1 A/cm²; and the temperature of the electrolyte was adjusted to 90°C, 100°C, and 110°C, respectively, and the electrolysis voltages at different temperatures were observed.

**Table 1**

| Test Item | Example | | | | | | Comparative Example | |
|---|---|---|---|---|---|---|---|---|
| | 1 | 2 | 3 | 4 | 5 | 6 | 1 | 2 |
| Average Pore diameter (4 V/A) (nm) | 90.9 2 | 75.82 | 86.19 | 69.27 | 101.1 7 | 94.50 | 1596.3 7 | 2327.3 5 |
| Surface Pore Volume Ratio (m²/g) | 19.1 12 | 17.61 8 | 14.36 8 | 15.01 9 | 17.31 9 | 15.26 2 | 6.368 | 4.352 |
| Diaphragm thickness(µm) | 90 | 200 | 220 | 300 | 550 | 340 | 500 | 550 |
| Porosity (%) | 76.4 9 | 80.28 | 75.13 | 74.69 | 77.29 | 81.22 | 62.31 | 65.47 |
| Alkali Solution Contact Angle at Diaphragm Surface (°) | <10 | <10 | <10 | <10 | <10 | <10 | 82.7 | 91.5 |
| Water Electrolysis Test 1 Voltage V (90°C, 1A/cm²) | 1.72 | 1.75 | 1.78 | 1.82 | 1.87 | 1.83 | 2.07 | 2.13 |
| Water Electrolysis Test 2 Voltage V (100°C, 1A/cm²) | 1.71 | 1.73 | 1.73 | 1.79 | 1.81 | 1.81 | 1.98 | 2.01 |
| Water Electrolysis Test 3 Voltage V (110°C, 1A/cm²) | 1.68 | 1.72 | 1.73 | 1.73 | 1.76 | 1.75 | 1.92 | 1.96 |

According to the data in Table 1, compared to the sulfonated polyphenylene sulfide woven fabrics in Comparative Examples 1 and 2, the composite diaphragms for hydrogen production by alkaline water electrolysis in Examples 1 to 6 have smaller average pore sizes and higher surface pore volume ratios and porosities. Therefore, they can more effectively prevent the mixing of oxygen produced on the anode side and hydrogen produced on the cathode side, and ensure the purity and safety of the generated hydrogen. At the same time, compared to the sulfonated polyphenylene sulfide woven fabrics in Comparative Examples 1 and 2, the composite diaphragms for hydrogen production by alkaline water electrolysis in Examples 1 to 6 have smaller alkali solution contact angle at their surfaces. The composite diaphragms for hydrogen production by alkaline water electrolysis in Examples 1 to 6 have stronger hydrophilicity and higher stability, which can avoid the problem of the detachment of inorganic materials caused by weak binding force between inorganic particles and the diaphragm substrate during long-term use. As shown in Table 1, the water electrolysis test results under identical current density but different electrolysis temperatures demonstrate that the composite diaphragm delivers lower voltage and higher current efficiency compared to sulfonated polyphenylene.

The present invention has been described as above with respect to preferred embodiments, but these embodiments are only exemplary and serve only illustrative purposes. On this basis, various substitutions and modifications can be made to the present invention, all of which fall within the scope of protection of the application.

## Claims

1. A method for preparing an organic-inorganic composite diaphragm for hydrogen production by alkaline water electrolysis, **characterized in that**, the method comprises the following steps of:
(1) adding a diaphragm-forming polymer, a sulfonated polymer, a metal salt, an aqueous alcohol solution, and a solvent with a mass ratio of (10~30):(5~20):(5~20):(1~5):(25~79) into a stirring kettle, heating to 65~95°C and stirring thoroughly until a homogeneous solution is obtained, and leaving the solution stand for defoaming to prepare a diaphragm-forming solution;
(2) evenly coating the diaphragm-forming solution onto the surface of a polymer support mesh, using an aqueous alcohol solution containing ions capable of precipitating the metal salt in the diaphragm-forming solution as a diaphragm-forming coagulation bath, and immersing the polymer support mesh coated with the diaphragm-forming solution into the diaphragm-forming coagulation bath to form a primary diaphragm via immersion precipitation phase separation; and
(3) removing the solvent from the primary diaphragm to obtain the organic-inorganic composite diaphragm.

2. The method according to claim 1, **characterized in that**, the diaphragm-forming polymer comprises one or more selected from the group consisting of polysulfone, polyethersulfone and polyimide.

3. The method according to claim 1 or 2, **characterized in that**, the sulfonated polymer comprises one or more selected from the group consisting of sulfonated polyphenylene sulfide, sulfonated polyether ether ketone and sulfonated polytetrafluoroethylene, and the sulfonation degree of the sulfonated polymer is preferably 2% to 30%.

4. The method according to any one of claims 1 to 3, **characterized in that**, the metal salt comprises one or more selected from the group consisting of calcium chloride, barium chloride, a mixture of nickel nitrate and ferrous sulfate, tetrabutyl titanate and zirconium oxychloride.

5. The method according to any one of claims 1 to 4, **characterized in that**, the alcohol contained in the aqueous alcohol solution is a low-molecular-weight alcohol, and the volume ratio of the alcohol to water is 80:20 to 60:40.

6. The method according to any one of claims 1 to 5, **characterized in that**, the solvent is one or more selected from the group consisting of N,N-dimethylacetamide, N,N-dimethylformamide, dimethyl sulfoxide and N- methylpyrrolidone.

7. The method according to any one of claims 1 to 6, **characterized in that**, the solvent in the primary diaphragm is removed by immersing the primary diaphragm in ultrapure water for 48h, and changing the ultrapure water every 12h.

8. The method according to any one of claims 1 to 7, **characterized in that**, the polymer support mesh is made by one or more materials selected from the group consisting of polypropylene, polyimide, polyphenylene sulfide, polyether ether ketone and nylon-66, and has a thickness of 10 to 450 µm and a mesh size of 20 to 150 mesh.

9. The method according to any one of claims 1 to 8, **characterized in that**, before coating the diaphragm-forming solution, the polymer support mesh is heated to a temperature of 40 to 80°C.

10. The method according to any one of claims 1 to 9, **characterized in that**, polyhydric alcohols are used in the aqueous alcohol solution of the diaphragm-forming coagulation bath, and the mass ratio of alcohol to water rangs from 5:95 to 25:75.

11. The method according to any one of claims 1 to 10, **characterized in that**, a mixture of diethylene glycol and triethylene glycol in equal mass proportions are used in the aqueous alcohol solution of the diaphragm-forming coagulation bath.

12. The method according to any one of claims 1 to 11, **characterized in that**, when the metal salt in the diaphragm-forming solution is calcium chloride, the diaphragm-forming coagulation bath comprises sodium carbonate, ammonium carbonate or phosphoric acid with a mass concentration of 2% to 15%; when the metal salt in the diaphragm-forming solution is barium chloride, the diaphragm-forming coagulation bath comprises sulfuric acid with a mass concentration of 1% to 10%; when the metal salt in the diaphragm-forming solution is a mixture of nickel nitrate and ferrous sulfate, the diaphragm-forming coagulation bath comprises potassium hydroxide with a mass concentration of 1% to 5%; when the metal salt in the diaphragm-forming solution is tetrabutyl titanate, the diaphragm-forming coagulation bath comprises hydrochloric acid with a mass concentration of 1% to 5%; and when the metal salt in the diaphragm-forming solution is zirconium oxychloride, the diaphragm-forming coagulation bath comprises ammonia water with a mass concentration of 1% to 10%.

13. The method according to any one of claims 1 to 12, **characterized in that**, the solvent in the primary diaphragm is removed by immersing the primary diaphragm in ultrapure water to thoroughly displace the solvent in the diaphragm, and then immersing the diaphragm sequentially in ethanol aqueous solutions with increasing concentration to remove the water from the diaphragm.

14. An organic-inorganic composite diaphragm for hydrogen production by alkaline water electrolysis, which is prepared by the method according to any one of claims 1 to 13.
